(19) Europäisches Patentamt
European Patent Office
Office européen des brevets

(11) Veröffentlichungsnummer: **0 368 104 B1**

(12) **EUROPÄISCHE PATENTSCHRIFT**

(45) Veröffentlichungstag der Patentschrift: **16.02.94**

(51) Int. Cl.5: **C08G 77/448**, C08G 64/00

(21) Anmeldenummer: **89120047.9**

(22) Anmeldetag: **28.10.89**

(54) **Thermoplastische Polyestercarbonat-Polysiloxan-Blockcopolymere.**

(30) Priorität: **10.11.88 DE 3838106**

(43) Veröffentlichungstag der Anmeldung:
**16.05.90 Patentblatt 90/20**

(45) Bekanntmachung des Hinweises auf die Patenterteilung:
**16.02.94 Patentblatt 94/07**

(84) Benannte Vertragsstaaten:
**DE ES FR GB IT NL**

(56) Entgegenhaltungen:
**EP-A- 0 073 067**
**EP-A- 0 146 827**
**EP-A- 0 149 789**
**EP-A- 0 416 376**
**DE-A- 2 640 241**
**US-A- 3 379 790**

**PATENT ABSTRACTS OF JAPAN vol. 5, no. 16 (C-41)(688) 30 Januar 1981, & JP-A-55 142048**

(73) Patentinhaber: **BAYER AG**

**D-51368 Leverkusen(DE)**

(72) Erfinder: **Serini, Volker, Dr.**
**Sebastian-Kneipp-Weg 2**
**D-4150 Krefeld(DE)**
Erfinder: **Nouvertné, Werner, Dr.**
**Burgstrasse 17 b**
**D-4150 Krefeld(DE)**
Erfinder: **Grigo, Ulrich, Dr.**
**Michelsheide 9**
**D-4152 Kempen(DE)**
Erfinder: **Paul, Winfried, Dr., Mobay Corporation Plastics**
**and Rubber Division, Building 8, Mobay Road**
**Pittsburgh PA. 15205(US)**
Erfinder: **Freitag, Dieter, Dr.**
**Hasenheide 10**
**D-4150 Krefeld(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 368 104 B1

## Beschreibung

Die Erfindung betrifft neue thermoplastische Polyestercarbonat-Polysiloxan-Blockcopolymere mit verbessertem Tieftemperaturzähbruchverhalten sowie deren Verwendung zur Herstellung von Formkörpern.

Aus der DE-OS 33 44 911 sind Siloxan-Polyestercarbonat-Blockcopolymere bekannt, die ein gutes technisches Wärmestandniveau sowie eine bessere thermoplastische Verarbeitbarkeit aufweisen als die nicht-modifizierten aromatischen Polyestercarbonate.

In der DE-OS 26 40 241 werden Polyestercarbonat-Polysiloxan-Blockcopolymere beschrieben, die 45 bis 60 Gew.-% Polysiloxanblöcke enthalten. Diese Polymere besitzen jedoch ein nicht befriedigendes technisches Wärmestandniveau.

Gegenstand der vorliegenden Erfindung sind Polyestercarbonat-Polysiloxan-Blockcopolymere mit wiederkehrenden Struktureinheiten

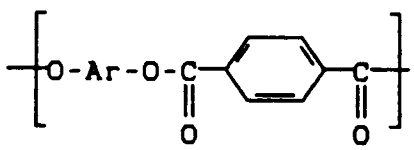 (1)

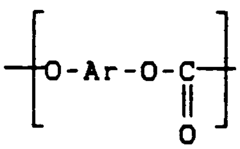 (3) und

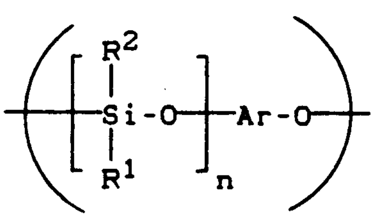 (4),

worin

$R^1$ und $R^2$ gleich oder verschieden sind und für gegebenenfalls durch Halogen substituiertes $C_1$-$C_{20}$-Alkyl, $C_2$-$C_6$-Alkenyl, $C_6$-$C_{14}$-Aryl, $C_7$-$C_{15}$-Aralkyl oder $C_7$-$C_{15}$-Alkaryl stehen und wobei jede

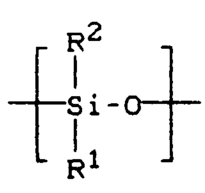

Einheit unterschiedlich durch $R^1$ und $R^2$ substituiert sein kann,

Ar einen ein- oder mehrkernigen aromatischen Rest mit 6 bis 30 C-Atomen bedeutet,

n eine ganze Zahl von 5 bis 200, bevorzugt 10 bis 100, besonders bevorzugt 20 bis 80, ganz

besonders bevorzugt 30 bis 70 darstellt und
worin die Struktureinheiten (1) 5 bis 98 Gew.-%, bevorzugt 10 bis 95 Gew.-%, besonders bevorzugt 15 bis 85 Gew.-% und ganz besonders bevorzugt 20 bis 65 Gew.-% der Summe der Struktureinheiten (1) und (3) und die Struktureinheiten (4) 0,1 bis 15 Gew.-% und ganz besonders bevorzugt 1 bis 8 Gew.-% der Summe der Struktureinheiten (1), (3) und (4) ausmachen.

Als Reste Ar der zuvor genannten wiederkehrenden Struktureinheiten kommen solche in Frage, die aromatischen Dihydroxyverbindungen zugrundeliegen, wie Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, $\alpha,\alpha'$-Bis-(hydroxyphenyl)-isopropylbenzole, Pentamethyl-(hydroxyphenyl)-indanole sowie entsprechende kernsubstituierte Verbindungen. Diese und weitere geeignete aromatische Dihydroxyverbindungen sind z.B. in der Monographie von H. Schnell, Chemistry and Physics of Polycarbonates, Polymer Reviews 9, Interscience Publishers, New York 1964, in der Veröffentlichung von V. Serini, D. Freitag und H. Vernaleken, Polycarbonate aus o,o,o',o'-tetramethylsubstituierten Bisphenolen, Angewandte Makromolekulare Chemie 55 (1976) 175 bis 189 sowie in den US-PS 3 028 365, 2 999 835, 3 148 172, 3 271 368, 2 991 273, 3 271 367, 3 780 078, 3 014 891 und 2 999 846, in den DT-OS 1 570 703, 2 063 050, 2 063 052, 2 211 957, 2 402 175, 2 402 176, 2 402 177 und in der FR-PS 1 561 518 beschrieben.

Bevorzugt werden folgende aromatische Dihydroxyverbindungen genannt: Hydrochinon, Bis-(4-hydroxyphenyl), 2,2-Bis-(4-hydroxyphenyl)-propan, Bis-(4-hydroxyphenyl)-sulfid, Bis-(4-hydroxyphenyl)-ether, Bis-(4-hydroxyphenyl)-keton, Bis-(4-hydroxyphenyl)-sulfon, Bis-(4-hydroxyphenyl)-methan, 1,1-Bis-(4-hydroxyphenyl)-cyclohexan, $\alpha,\alpha'$-Bis-(4-hydroxyphenyl)-p-diisopropylbenzol, 1,1-Bis-(4-hydroxyphenyl)-1-phenyl-ethan, 2,2-Bis-(3-methyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 2,2-Bis-(3,5-dimethyl-4-hydroxyphenyl)-propan, Bis-(3,5-dimethyl-4-hydroxyphenyl)-methan, 2,2-Bis-(3,5-dimethyl-4-hydroxyphenyl)-butan und Bis-(3,5-dimethyl-4-hydroxyphenyl).

Besonders bevorzugt werden genannt: Bis-(4-hydroxyphenyl), 2,2-Bis-(4-hydroxyphenyl)-propan und 2,2-Bis-(3,5-dimethyl-4-hydroxyphenyl)-propan, wobei 2,2-Bis-(4-hydroxyphenyl)-propan ganz besonders bevorzugt ist.

Als Reste $R^1$ und $R^2$ werden bevorzugt $C_1$-$C_6$-Alkyl, $C_2$-$C_8$-Alkenyl, $C_6$-$C_{10}$-Aryl, $C_7$-$C_{12}$-Aralkyl und $C_7$-$C_{12}$-Alkaryl genannt. Die genannten Reste können ganz oder teilweise durch Halogen, wie Fluor, Chlor oder Brom, bevorzugt Fluor und Chlor, besonders bevorzugt Fluor, substituiert sein Bevorzugt werden folgende Reste $R^1$ und $R^2$ genannt: Methyl, Ethyl, Propyl, n-Butyl, tert.-Butyl, Vinyl, Phenyl, Naphthyl, Chlormethyl, 3,3,3-Trifluorpropyl, Perfluorbutyl und Perfluoroctyl, besonders bevorzugt Methyl und Phenyl, ganz besonders bevorzugt Methyl.

Die erfindungsgemäßen Polyestercarbonat-Polysiloxan-Blockcopolymere können nach Verfahren hergestellt werden, wie sie für die Polyestercarbonat-Herstellung aus der Literatur bekannt sind, so z.B. nach Schmelzumesterungsverfahren, nach Verfahren in homogener Lösung und nach Zweiphasengrenzflächenverfahren. Bevorzugt werden Zweiphasengrenzflächenverfahren angewandt (s. EP 0 036 080, V. V. Korshak und S. V. Vinograda, Polyesters, Pergamon Press, 1965, S. 448).

Als Ausgangskomponenten für die Herstellung der erfindungsgemäßen Polyestercarbonat-Polysiloxan-Blockcopoly meren nach dem Zweiphasengrenzflächenverfahren werden bevorzugt aromatische Dihydroxyverbindungen, Terephthalsäuredichlorid, Phosgen und Polydiorganosiloxane mit Hydroxyaryloxy-Endgruppen eingesetzt. Dabei ist es möglich, unterschiedlich substituierte Polydiorganosiloxane im Gemisch einzusetzen. Solche Polydiorganosiloxane mit Hydroxyaryloxy-Endgruppen werden z.B. in der DE-OS 33 34 782 beschrieben.

Auch der Einsatz von Terephthalsäure ist beim Zweiphasengrenzflächenverfahren möglich, wobei intermediär mit Hilfe von Phosgen Dicarbonsäurechloride bzw. -dichloride gebildet werden. Ebenso ist der Einsatz von Polydiorganosiloxanen möglich, die

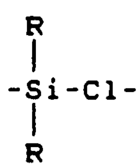

Endgruppen aufweisen. Ebenso können Bischlorkohlensäureester der aromatischen Dihydroxyverbindungen zum Einsatz kommen.

Die erfindungsgemäßen Polyestercarbonat-Polysiloxan-Copolymere können anstatt Terephthalsäure bis zu 30 Mol-%. andere Dicarbonsäuren, insbesondere aromatische Dicarbonsäuren, wie tert.-Butylisophthalsäure, 3,3′-Diphenyldicarbonsäure, 4,4′-Diphenyldicarbonsäure,4,4′-Benzophenondicarbonsäure, 3,4′-Benzophenondicarbonsäure, 4,4′-Diphenyletherdicarbonsäure, 4,4′-Diphenylsulfondicarbonsäure, 2,2-Bis-(4-carboxyphenyl)-propan, Trimethyl-3-phenylindan-4′,5-dicarbonsäure oder Naphthalin-dicarbonsäure cokondensiert enthalten, bezogen auf die Summe der Dicarbonsäuren. Ebenso können sie bis zu 40 Mol-% Hydroxycarbonsäuren, insbesondere aromatische Hydroxycarbonsäuren, wie p-Hydroxybenzoesäure oder Hydroxynaphthoesäuren einkondensiert enthalten, bezogen auf die Summe der aromatischen Dicarbonsäuren.

Die erfindungsgemäßen Polyestercarbonat-Polysiloxan-Blockcopolymere können in üblicher Weise abgemischt werden mit mindestens einem Polymeren aus der Gruppe der aromatischen Polyestercarbonate, aromatischen Polyester und aromatischen Polycarbonate. Der Anteil der den erfindungsgemäßen Blockcopolymeren zugemischten oben erwähnten Polymeren ist dabei zweckmäßigerweise so zu bemessen, daß das Eigenschaftsbild der erfindungsgemäßen thermoplastischen Polyestercarbonat-Polysiloxan-Blockcopolymere nicht wesentlich geändert wird. Üblicherweise beträgt der Anteil der zugemischten Polymere ca. 97 bis 1 Gew.-%, besonders bevorzugt 90 bis 1 Gew.-%, bezogen auf die Gesamtmischung. Bevorzugt wird der Anteil der erwähnten Polymere so bemessen, daß die Summe der Einheiten (1) bis (4) unter die erfindungsgemäßen Grenzen der Polyestercarbonat-Polysiloxan-Blockcopolymeren fällt.

Die Polykondensation erfolgt beim Zweiphasengrenzflächenverfahren in einem Zweiphasensystem aus wäßriger Alkalilösung und mit Wasser nicht mischbarem organischem Lösungsmittel. Die Polykondensation wird im allgemeinen mit Hilfe eines Katalysators durchgeführt. Gegebenenfalls wird die Polykondensation in Gegenwart von Kettenbegrenzern, Verzweigern und Antioxidantien durchgeführt.

Als mit Wasser nicht mischbare organische Lösemittel können beispielsweise chlorierte Kohlenwasserstoffe, wie Chloroform, Dichlorethan, Tri- und Tetrachlorethylen, Tetrachlorethan, Dichlormethan, Chlorbenzol und Dichlorbenzol, aber auch nicht chlorierte Kohlenwasserstoffe, wie Toluol und Xylol eingesetzt werden. Bevorzugt werden Chlorbenzol oder Dichlormethan oder Mischungen von beiden verwendet.

Als Kettenbegrenzer werden Verbindungen eingesetzt, wie sie von der Herstellung von Polycarbonaten, Polyestern und Polyestercarbonaten her bekannt sind, so z.B. sekundäre Amine, Phenole und Säurechloride. Bevorzugt werden verwendet Phenole, wie beispielsweise Phenol, Alkylphenole, bevorzugt mit $C_1$-$C_{12}$-Alkylgruppen, wie p-tert.-Butylphenol, m- und p-3,5-dimethyl-heptyl-phenol und m-und p-1,1,3,3-tetramethylbutylphenol, Hydroxydiphenyl und p-Cumylphenol. Besonders bevorzugt wird das p-1,1,3,3-Tetramethylbutylphenol (p-Isooctylphenol) eingesetzt.

Als Verzweiger lassen sich mindestens trifunktionelle Verbindungen einsetzen. Solche Verzweiger sind bekannt (s. EP 00 36 080, DE-OS 3 506 472, DE-OS 2 615 038) und werden im allgemeinen in Mengen von ca. 0,01 bis 3 Mol-%, bezogen auf eingesetzte aromatische Dihydroxyverbindungen, eingesetzt.

Als Katalysatoren können insbesondere tertiäre Amine und Phasentransferkatalysatoren, wie quartäre Ammonium- und Phosphoniumverbindungen und Kronenether eingesetzt werden. Bevorzugte Katalysatoren sind beispielsweise N-Ethylpiperidin, Tetrabutylammoniumbromid und/oder Triphenylbenzylphosphoniumbromid.

Die erfindungsgemäßen Polyestercarbonat-Polysiloxan-Blockcopolymeren weisen im allgemeinen relative Viskositäten ($\eta$rel) von ca 1,10 bis 5,0, bevorzugt von 1,15 bis 3,0, besonders bevorzugt von 1,18 bis 1,60, ganz besonders bevorzugt von 1,20 bis 1,50 und insbesondere von 1,24 bis 1,40, auf, gemessen in Dichlormethan oder in Phenol/o-Dichlorbenzol (1/1 Gew.-Teile) bei c = 5 g/l und 25 °C.

Die erfindungsgemäßen Polyestercarbonat-Polysiloxan-Blockcopolymeren lassen sich zu Formkörpern hoher Zähigkeit, insbesondere auch hoher Tieftemperaturzähigkeit, verarbeiten. Für Teile, die bei tiefen Temperaturen nicht oder nicht spröde brechen dürfen (Stoßfänger, Automobilinnenteile), sind die erfindungsgemäßen Polyestercarbonat-Polysiloxan-Blockcopolymeren damit besonders gut geeignet.

Die erfindungsgemäßen Polyestercarbonat-Polysiloxan-Blockcopolymeren können gegebenenfalls noch Farbstoffe, Pigmente, Stabilisatoren, Flammschutzmittel, Füll- und Verstärkungsstoffe, wie z.B. Glasfasern oder C-Fasern, oder andere Hilfsstoffe in üblichen Mengen eingemischt enthalten.

Die erfindungsgemäßen Polyestercarbonat-Polysiloxan-Blockcopolymeren weisen gegenüber den in der DE-OS 33 44 911 beschriebenen Blockcopolymeren ein besseres Tieftemperaturzähbruchverhalten auf, wenn man Polyestercarbonat-Polysiloxan-Blockcopolymere gleicher Wärmestandfestigkeit vergleicht. Gegenüber den Polyestercarbonat-Polysiloxan-Blockcopolymeren der DE-OS 26 40 241 besitzen die erfindungsgemäßen Blockcopolymeren eine höhere Steifigkeit.

Beispiel 1 Polyestercarbonat-Polysiloxan-Blockcopolymer; enthaltend 5 Gew.-% Polysiloxan-Blöcke, Polyester-Anteil: 40 Gew.-% des Polyestercarbonat-Anteils, Terephthalatanteil: 100 Gew.-% des Polyesteranteils (APESI 40 T 100/Si 5)

In 85 kg destilliertem Wasser wurden 840 g NaOH (21 Mol) und 2283 g Bisphenol A (10 Mol) gelöst. Dazu wurden 55 kg Methylenchlorid gegeben, in denen 103 g p-Isooctylphenol (0,5 Mol) und 151 g eines Polydimethylsiloxans mit dem mittleren Polykondensationsgrad $\overline{P}_n$ = 60 und mit Bisphenol A-Endgruppen (0,031 Mol) gelöst enthalten waren. Unter Rühren wurden bei einer Temperatur von 25 °C 675 g Terephthalsäuredichlorid (3,2 Mol), gelöst in 5 kg Methylenchlorid, und 495 g Phosgen (5 Mol) gleichzeitig und gleichmäßig innerhalb 30 Minuten zugegeben. Dann wurde 30 Minuten bei 25 °C weitergerührt. Anschließend wurden 840 g NaOH (21 Mol), gelöst in 5 kg destilliertem Wasser, zugesetzt und weitere 495 g Phosgen (5 Mol) bei 25 °C in 30 Minuten bei 25 °C gleichmäßig zugesetzt. Dann erfolgte die Zugabe von 45 g N-Ethylpiperidin (0,4 Mol) und es wurde noch 30 Minuten bei 25 °C weitergerührt.

Zur Aufarbeitung des gebildeten Polyestercarbonat-Polysiloxan-Blockcopolymers wurde die organische Phase aus dem Zweiphasengemisch abgetrennt und mit verdünnter wäßriger NaOH, verdünnter wäßriger $H_3PO_4$ und destilliertem Wasser gewaschen, bis das Waschwasser elektrolytfrei war. Das Polyestercarbonat-Polysiloxan-Blockcopolymer wurde dann nach Zugabe von Chlorbenzol zu der Methylenchlorid-Lösung in einem Kessel zu einer konzentrierten Lösung voreingedampft, aus der dann das Polyestercarbonat-Polysiloxan-Blockcopolymer durch Ausdampfextrusion als Granulat isoliert wurde. Die relative Viskosität des Granulats betrug $\eta$rel = 1,261, gemessen in $CH_2Cl_2$ bei 25 °C, c = 5 g/l. Dieses Granulat wurde dann im Extrusionsspritzguß zu Prüfkörpern verarbeitet. Die an diesen Prüfkörpern erhaltenen Prüfergebnisse sind in der folgenden Tabelle enthalten.

Beispiel 2 (Vergleich)

Polyestercarbonat-Polysiloxan-Blockcopolymer: enthaltend 5 Gew.-% Polysiloxan-Blöcke, Polyester-Anteil: 53 Gew.-% des Polyestercarbonat-Anteils, Terephthalatanteil: 50 Gew.-% des Polyesteranteils aus Terephthalat und Isophthalat (APESI 53 T 50/Si 5)

In 85 kg destilliertem Wasser wurden 840 g NaOH (21 Mol) und 2283 Bisphenol A (10 Mol) gelöst. Dazu wurden 55 kg Methylenchlorid gegeben, in denen 103 g p-Isooctylphenol (0,5 Mol) und 158 g eines Polydimethylsiloxans mit dem mittleren Polykondensationsgrad $\overline{P}_n$ = 60 und mit Bisphenol A-Endgruppen (0,032 Mol) gelöst enthalten waren. Unter Rühren wurden bei einer Temperatur von 25 °C 950 g Terephthalsäuredichlorid/Isophthalsäuredichlorid-Gemisch 1/1, gelöst in 5 kg Methylenchlorid, und 396 g Phosgen (4 Mol) gleichzeitig und gleichmäßig innerhalb 30 Minuten zugegeben. Dann wurde 30 Minuten bei 25 °C weitergerührt. Anschließend wurden 880 g NaOH (22 Mol), gelöst in 5 kg destilliertem Wasser zugesetzt und weitere 495 g Phosgen (5 Mol) bei 25 °C in 30 Minuten bei 25 °C gleichmäßig zugesetzt. Dann erfolgte die Zugabe von 45 g N-Ethylpiperidin (0,4 Mol) und es wurde noch 30 Minuten bei 25 °C weitergerührt.

Zur Aufarbeitung des gebildeten Polyestercarbonat-Polysiloxan-Blockcopolymers wurde die organische Phase aus dem Zweiphasengemisch abgetrennt und mit verdünnter wäßriger NaOH, verdünnter wäßriger $H_3PO_4$ und destilliertem Wasser gewaschen, bis das Waschwasser elektrolytfrei war. Das Polyestercarbonat-Polysiloxan-Blockcopolymer wurde dann nach Zugabe von Chlorbenzol zu der Methylenchlorid-Lösung in einem Kessel zu einer konzentrierten Lösung voreingedampft, aus der dann das Polyestercarbonat-Polysiloxan-Blockcopolymer durch Ausdampfextrusion als Granulat isoliert wurde. Die relative Viskosität des Granulats betrug $\eta_{rel}$ = 1,258, gemessen in $CH_2Cl_2$ bei 25 °C, c = 5 g/l. Dieses Granulat wurde dann im Extrusionsspritzguß zu Prüfkörpern verarbeitet. Die an diesen Prüfkörpern erhaltenen Prüfergebnisse sind in der folgenden Tabelle enthalten.

Beispiele 3 bis 6 Polyestercarbonat-Polysiloxan-Blockcopolymere unterschiedlicher Zusammensetzung:

Entsprechend den Polyestercarbonat-Polysiloxan-Blockcopolymeren der Beispiele 1 und 2 wurden durch Einsatz entsprechend geänderter Reaktandenverhältnisse bei sonst gleicher Herstellungsweise und gleichen Reaktanden folgende Polyestercarbonat-Polysiloxan-Blockcopolymere hergestellt und zu Prüfkörpern verarbeitet (Polysiloxan-Block gleicher Anteil):

| Bsp. Nr. | Kurzbezeichnung des Polymers | Polyesteranteil des Polyester-carbonatanteils (Gew.-%) | Terephthalat-Anteil des Polyesteranteils aus Terephthalat und Isophthalat (Gew.-%) | ηrel* des Granulats |
|---|---|---|---|---|
| 3 | APESI 55 T 100/Si 5 | 55 | 100 | 1,301 |
| 4 | APESI 74 T 50/Si 5 (Vergleich) | 74 | 50 | 1,303 |
| 5 | APESI 22 T 100/Si 5 | 22 | 100 | 1,262 |
| 6 | APESI 30 T 50/Si 5 (Vergleich) | 30 | 50 | 1,265 |

*) = ηrel in $CH_2Cl_2$ bei 25°C, c = 5 g/l

<u>Tabelle</u> Kritische Temperatur (Zähbruch-Sprödbruch-Übergang) von Polyestercarbonat-Polysiloxan-Blockcopolycarbonaten

$T_{krit.}$ = kritische Temperatur: Temperatur, bei der der Zähbruch des Polymeren (Bruchbild mit verstreckten Bereichen, muschelig) in den Sprödbruch übergeht (Bruchbild glatt); bestimmt an gekerbtem Prüfkörper (80 x 10 x 3,2 mm), die zur Bestimmung der Izod-Kerbschlagzähigkeit geschlagen wurden und dabei brachen (ISO 180 Methode 4 A, Izod-Schlagbiege-Versuch)

| Bsp. Nr. | Polymer | $T_{krit.}$ (°C) | Wärmestandfestigkeit nach Vicat B (°C) |
|---|---|---|---|
| 1 | APESI 40 T 100/Si 5 | unter -60 | 169 |
| 2 | APESI 53 T 50/Si 5 (Vergleich) | -35 | 169 |
| 3 | APESI 55 T 100/Si 5 | -50 | 178 |
| 4 | APESI 74 T 50/Si 5 (Vergleich) | über +25 | 178 |
| 5 | APESI 22 T 100/Si 5 | unter -65 | 158 |
| 6 | APESI 30 T 50/Si 5 (Vergleich) | -40 | 158 |

Bei den obigen Beispielen wurde darauf geachtet, daß die Wärmestandfestigkeit der Polyestercarbonat-Polysiloxan-Blockcopolymeren nach Vicat B innerhalb einer Vergleichsgruppe den gleichen Wert hatte. Dies ist für die Technik wichtig und wurde durch einen entsprechend unterschiedlichen Polyesteranteil erreicht, wie der Tabelle zu entnehmen ist.

## Patentansprüche

1. Polyestercarbonat-Polysiloxan-Blockcopolymere mit wiederkehrenden Struktureinheiten

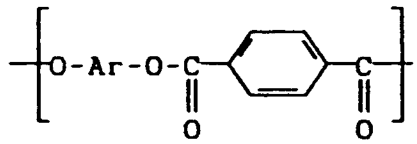

(1)

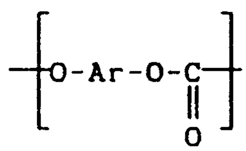

(3) und

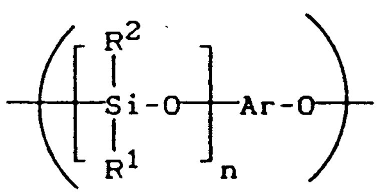

(4),

worin

R¹ und R² gleich oder verschieden sind und für gegebenenfalls durch Halogen substituiertes $C_1$-$C_{20}$-Alkyl, $C_2$-$C_6$-Alkenyl, $C_6$-$C_{14}$-Aryl, $C_7$-$C_{15}$-Aralkyl oder $C_7$-$C_{15}$-Alkaryl stehen und wobei jede

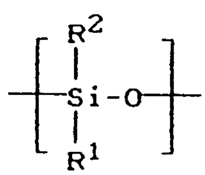

Einheit unterschiedlich durch $R^1$ und $R^2$ substituiert sein kann,

Ar einen ein- oder mehrkernigen aromatischen Rest mit 6 bis 30 C-Atomen bedeutet,

n eine ganze Zahl von 5 bis 200 darstellt und

worin die Struktureinheiten (1) 5 bis 98 Gew.-% der Summe der Struktureinheiten (1) und (3) und die Struktureinheiten (4) 0,1 bis 15 Gew.-% der Summe der Struktureinheiten (1), (3) und (4) ausmachen.

2. Verwendung der Polyestercarbonat-Polysiloxan-Blockcopolymere gemäß Anspruch 1 zur Herstellung von Formkörpern.

## Claims

1. Polyester carbonate/polysiloxane block copolymers containing recurring structural units

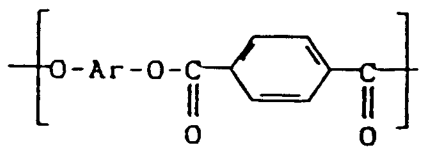

(1)

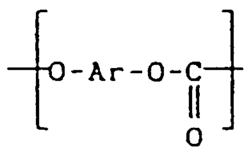

(3) and

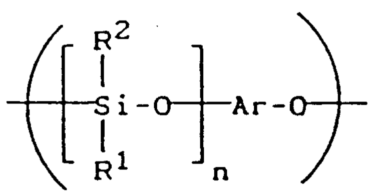

(4),

in which

$R^1$ and $R^2$ may be the same or different and represent optionally halogen-substituted $C_{1-20}$ alkyl, $C_{2-6}$ alkenyl, $C_{6-14}$ aryl, $C_{7-15}$ aralkyl or $C_{7-15}$ alkaryl and each

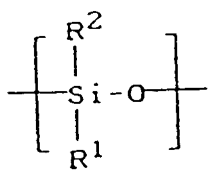

unit may be differently substituted by $R^1$ and $R^2$,

Ar is a mononuclear or polynuclear aromatic $C_{6-30}$ radical,

n is an integer of 5 to 200 and

in which the structural units (1) make up from 5 to 98% by weight of the sum of the structural units (1) and (3) and the structural units (4) make up from 0.1 to 15% by weight of the sum of the structural units (1), (3) and (4).

2. The use of the polyester carbonate/polysiloxane block copolymers claimed in claim 1 for the production of mouldings.

## Revendications

1. Copolymères séquencés polyestercarbonate-polysiloxanne comportant les unités structurales récurrentes

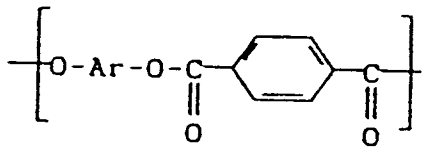

(1)

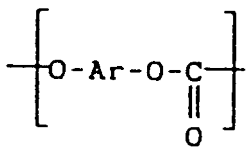

(3) et

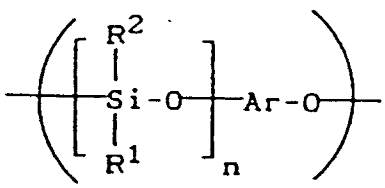

(4),

où

$R^1$ et $R^2$ sont identiques ou différents et représentent un groupe alkyle en $C_1$-$C_{20}$, alcényle en $C_2$-$C_6$, aryle en $C_6$-$C_{14}$, aralkyle en $C_7$-$C_{15}$ ou alkylaryle en $C_7$-$C_{15}$, éventuellement halogénosubstitué, et où chaque unité

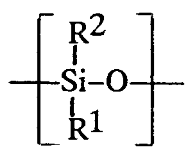

peut être substituée différemment par $R^1$ et $R^2$,

Ar représente un reste aromatique mono- ou polycyclique de 6 à 30 atomes de carbone,

n représente un nombre entier de 5 à 200 et

où les unités structurales (1) constituent 5 à 98 % en poids de la somme des unités struturales (1) et (3) et les unités structurales (4) constituent 0,1 à 15 % en poids de la somme des unités structurales (1), (3) et (4).

**2.** Utilisation des copolymères séquencés polyestercarbonate-polysiloxanne selon la revendication 1 pour la fabrication de corps façonnés.